# EUROPEAN PATENT APPLICATION

(11) **EP 4 629 489 A1**
(43) Date of publication of application: **08.10.2025**
(21) Application number: 23946602.2
(22) Date of filing: 24.07.2023
(51) Int. Cl.: H02K 11/30, H02K 5/00, H02K 5/08

(54) **ARMATURE DEVICE AND VALVE DEVICE**

(71) Applicant: Pacific Industrial Co., Ltd., Ogaki-shi, Gifu 503-8603 (JP)
(72) Inventor: HORI, Shigeki, Ogaki-shi, Gifu 503-8603 (JP)
(74) Representative: Kramer Barske Schmidtchen Patentanwälte PartG mbB
(86) International application number: PCT/JP2023/026940
(87) International publication number: WO 2025/022516

(57) **Abstract**

[Object] Provided is a technique for reducing the number of components when a plurality of stepper motors are used.

[Solution] An armature device according to an embodiment includes: a plurality of armature packages, each of which including an armature that is fitted to an outer side of a rotor case of a stepper motor and that is covered with a resin member; a shared base made of resin to which the plurality of armature packages are commonly fixed; a connector part having one hood part integrally formed with the shared base and a plurality of connector terminals that are at least partially accommodated in the hood part; and a relay circuit that is covered with either the shared base or the resin member of the armature packages, or both, and connects the plurality of connector terminals to each of the armatures.

## Description

### TECHNICAL FIELD

The present disclosure relates to an armature device having an armature package in which an armature that is fitted to a rotor case of a stepper motor is covered with a waterproof resin member, and a valve device in which a rotor-equipped valve is attached to such an armature device.

### BACKGROUND ART

In recent years, with the increase in performance and multi-functionalization of electrical products, those provided with a plurality of stepper motors have become widespread (see, for example, Patent Document 1).

### RELATED ART DOCUMENTS

### PATENT DOCUMENTS

Patent Document 1: JP 2010-11624 A (paragraph [0032])

### SUMMARY OF THE INVENTION

### PROBLEMS TO BE SOLVED BY THE INVENTION

However, in the conventional technique, the management cost of components has been increased due to an increase in the number of components along with an increase in the number of stepper motors. Therefore, the present application provides a technique for reducing the number of components in the case of using a plurality of stepper motors.

### MEANS OF SOLVING THE PROBLEMS

An aspect of the invention made to solve the above problems is an armature device including: a plurality of armature packages, each of which including an armature that is fitted to an outer side of a rotor case of a stepper motor and that is covered with a resin member; a shared base made of resin to which the plurality of armature packages are commonly fixed; a connector part having one hood part integrally formed with the shared base and a plurality of connector terminals that are at least partially accommodated in the hood part; and a relay circuit that is covered with either the shared base or the resin member of the armature package, or both, and connects the plurality of connector terminals to each of the armatures.

### BRIEF DESCRIPTION OF THE DRAWINGS

[FIG.1] FIG. 1 is a perspective view of a valve device according to a first embodiment.
[FIG.2] FIG. 2 is a sectional side view of a rotor-equipped valve.
[FIG.3] FIG. 3 is a sectional side view of the valve device.
[FIG.4] FIG. 4 is a perspective view of a shared base.
[FIG.5] FIG. 5 is a perspective view of a terminal group unit.
[FIG.6] FIG. 6 is a perspective view of the terminal group unit.
[FIG.7] FIG. 7 is an enlarged perspective view of a part of the shared base.
[FIG.8] FIG. 8 is a cross-sectional plan view of an armature device.
[FIG.9] FIG. 9 is a cross-sectional plan view of the armature device.
[FIG. 10] FIG. 10 is a circuit diagram of the armature device.
[FIG.11] FIG. 11 is a perspective view of a terminal group unit according to a second embodiment.
[FIG. 12] FIG. 12 is an enlarged perspective view of a part of a shared base.
[FIG. 13] FIG. 13 is a perspective view of a shared base according to a third embodiment.
[FIG. 14] FIG. 14 is a perspective view of the shared base.
[FIG. 15] FIG. 15 is a perspective view of a valve device according to a fourth embodiment.
[FIG. 16] FIG. 16A is a perspective view of a shared base according to a fifth embodiment, and FIG. 16B is a perspective view of a circuit board according to the fifth embodiment.
[FIG. 17] FIG. 17 is a cross-sectional plan view of the shared base.

### MODE FOR CARRYING OUT THE INVENTION

### [First embodiment]

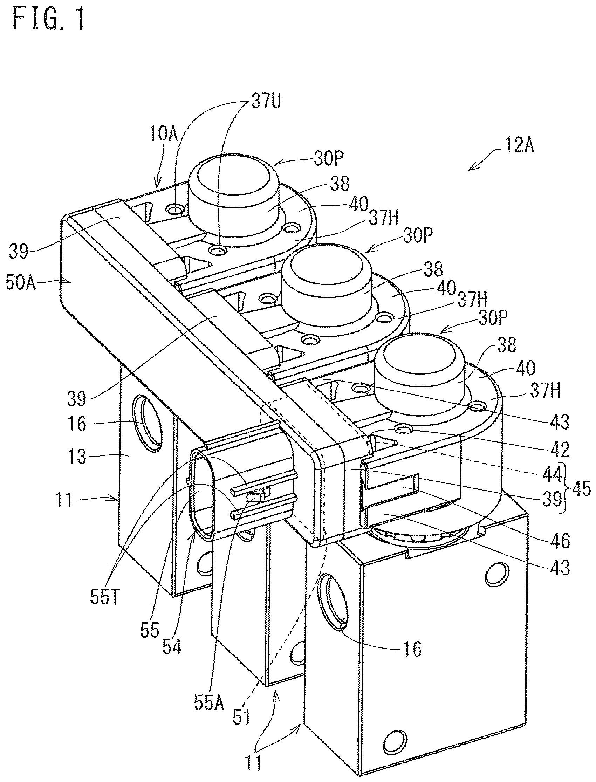

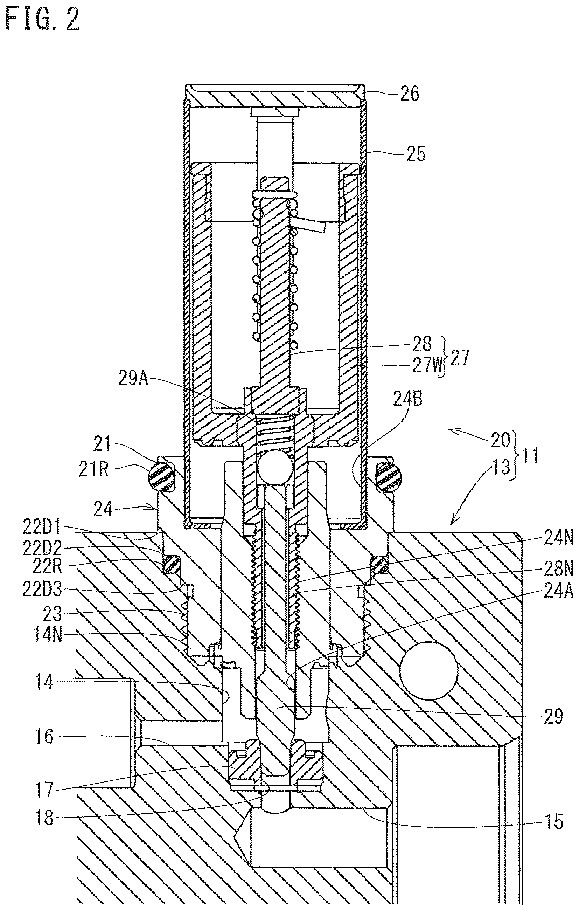

A valve device 12A according to a first embodiment will be described with reference to FIGS. 1 to 10. As illustrated in FIG. 1, the valve device 12A is formed by attaching a plurality of rotor-equipped valves 11 to an armature device 10A. Hereinafter, the "upper side and lower side in FIGS. 1 and 2" are simply referred to as "upper side, lower side" or the like. The rotor-equipped valve 11 will be first described.

As illustrated in FIG. 2, the rotor-equipped valve 11 includes a base member 13 and a valve main body 20. The base member 13 has, for example, a rectangular parallelepiped shape (see FIG. 1), and includes a vertical hole 14 extending from an upper surface of the base member 13 to an intermediate position in the vertical direction, and first and second lateral holes 15 and 16 extending from a lower end portion and a position close to the lower end portion of the vertical hole 14 to side surfaces of the base member 13, respectively. In addition, a valve seat member 17 is press-fitted into a portion of the vertical hole 14 between the connection portion with the first lateral hole 15 and the connection portion with the second lateral hole 16, and a valve hole 18 penetrates the central portion of the valve seat member 17.

The base member 13 is not limited to a rectangular parallelepiped shape, and may be, for example, a circular column body. In addition, the vertical hole 14 formed in the base member 13 is not limited to the one extending from the upper surface of the base member 13 to an intermediate position in the vertical direction. For example, a hole may extend entirely to the lower side, and the through-hole may be designated as a third lateral hole. Further, the valve seat member 17 is a separate member from the base member 13, but may be integrated with the base member 13, for example. The material of the valve seat member 17 is, for example, preferably a hard metal such as stainless steel.

A valve body support member 24 included in the valve main body 20 is inserted into an upper portion of the vertical hole 14. The valve body support member 24 is formed by fitting a plurality of tubular parts, and an outer diameter thereof is gradually reduced downward. An O-ring groove 21 for accommodating an O-ring 21R is provided at the upper end portion of the outer peripheral surface of the valve body support member 24, and a threaded portion 23 is formed at a position near the lower end. Furthermore, first to third step portions 22D1, 22D2, and 22D3 are formed between the O-ring groove 21 and the threaded portion 23 on the outer peripheral surface of the valve body support member 24, and an O-ring 22R is fitted between the second and third step portions 22D2 and 22D3. The threaded portion 23 engages with a threaded portion 14N of the vertical hole 14, the first step portion 22D1 comes into contact with the upper surface of the base member 13, and the O-ring 22R is in close contact with the inner surface of the vertical hole 14.

A central hole 24A through which a valve body 29 to be described later is inserted is formed in a central portion of the valve body support member 24, and an annular groove 24B concentric with the central hole 24A is formed in an upper surface of the valve body support member 24. The annular groove 24B is a recess to which a rotor case 25 is connected, and a lower end portion of the cylindrical rotor case 25 is fitted into the annular groove 24B and is welded or brazed, for example. A lid body 26 is, for example, welded or brazed to an upper end portion of the rotor case 25. A rotor 27 is provided inside the rotor case 25.

The valve body support member 24 is not limited to a configuration in which all of the first to third step portions 22D1, 22D2, and 22D3 come into contact with the base member 13 for positioning. It may be configured such that at least one of these step portions comes into contact with the base member 13 for positioning. For example, provided that it does not interfere with the threaded portions 14N and 23, the third step portion 22D3 may come into contact with the base member for positioning. Further, the fixation between the valve body support member 24 and the base member 13 may be configured in a manner other than the engagement of the threaded portions 14N and 23. Furthermore, in the above embodiment, the O-rings 21R and 22R are disposed only above the threaded portions 14N and 23, but the present invention is not limited thereto, and may be disposed only below, or may be disposed both above and below. Furthermore, packing may be used instead of the O-rings 21R and 22R, or the O-rings 21R and 22R do not need to be provided depending on a fixing method. Further, the rotor case 25 of the present embodiment is fixed to the valve body support member 24 by welding or brazing, but may be fixed to the valve body support member 24 with, for example, a screw or an adhesive as long as sealability and strength can be secured. Moreover, although the rotor case 25 is provided with the lid body 26, it may be configured such that the lid body 26 is not provided and the upper end is open.

The rotor 27 is, for example, a magnet rotor having a plurality of S-poles and N-poles (not illustrated) on the outer peripheral surface, and has a structure in which a shaft member 28 penetrates the center portion of a cylindrical body 27W having a bottom at the lower end. A portion of the shaft member 28 extending downward from the cylindrical body 27W is accommodated in the central hole 24A. A threaded portion 28N formed on the outer surface of the lower portion of the shaft member 28 engages with a threaded portion 24N formed on the inner surface of the central hole 24A. The shape of the rotor 27 is not limited to the one having a bottom at the lower end. For example, it may have an H-shaped cross-section or have a closed upper end.

The lower side of the shaft member 28 from an intermediate position in the axial direction has a hollow structure, and the valve body 29 is fitted inside the hollow structure. The valve body 29 is locked in the shaft member 28 by the contact between the step portion provided in the upper portion of the valve body 29 and the step portion in the shaft member 28. In the shaft member 28, a compression coil spring 29A is accommodated above the valve body 29, and the valve body 29 is biased downward by the resilient force of the compression coil spring 29A. Furthermore, the lower portion of the valve body 29 protrudes downward from the valve body support member 24. As the rotor 27 rotates, the valve body 29 moves in the vertical direction together with the rotor 27, and approaches and separates from the valve seat member 17. When the valve body 29 moves to the lower end position of the movable range, the valve hole 18 is closed, and the flow rate of a fluid that can pass through the valve hole 18 is changed according to the amount of movement upward from the lower end position.

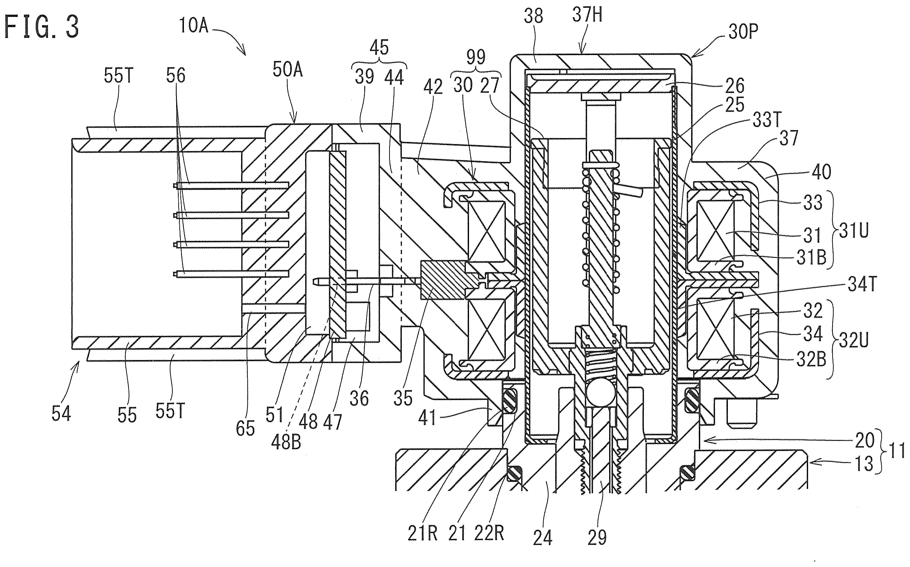

As illustrated in FIG. 3, the armature device 10A includes an armature 30 that is fitted to the outer side of the rotor case 25 and constitutes a part of a stepper motor 99 together with the rotor 27. The armature 30 has, for example, the same structure as a general armature of a claw pole type stepper motor.

Specifically, the armature 30 includes a first coil unit 31U having a structure in which a bobbin 31B around which a first-phase coil 31 is wound is covered with a flat cylindrical yoke 33, and a second coil unit 32U similarly having a structure in which a bobbin 32B around which a second-phase coil 32 is wound is covered with a yoke 34. The first coil unit 31U and the second coil unit 32U are arranged coaxially. On the inner peripheral surface of each of the yokes 33 and 34, a plurality of teeth 33T and 34T perpendicularly bent from one end face of each of the yokes 33 and 34 and a plurality of teeth 33T and 34T perpendicularly bent from the other end face are alternately arranged. Among the plurality of teeth 33T and 34T, the inner surfaces facing the central axes of the yokes 33 and 34 are curved in an arc shape and located in a cylindrical surface having substantially the same diameter as the outer peripheral surface of the rotor case 25.

The stepper motor 99 of the present embodiment is of a claw pole type, but may be of any type as long as it includes the rotor case 25. Specifically, for example, a plurality of teeth arranged in the circumferential direction on the stator side may be provided, and a coil may be wound around each tooth.

A plurality of lead terminals 36 are connected to the end portions of the coils 31 and 32. In an armature package 30P, the plurality of lead terminals 36 and the armature 30 are covered with a resin member 37 except for some portions. Specifically, the plurality of lead terminals 36 are set in a primary molding die and a lead terminal group unit having a structure in which the lead terminals 36 are held by a holding member 35 made of resin is insert-molded. The coils 31 and 32 connected to the plurality of lead terminals 36 of the lead terminal group unit and the holding member 35 sandwiched between the yokes 33 and 34 are set in a secondary molding die, and the armature package 30P covered with the resin member 37 to be a housing 37H is insert-molded.

The housing 37H includes a cylindrical main body 40 having a cylindrical shape and covering substantially the entire yokes 33 and 34, a cylindrical protrusion 38 extending upward from an inner edge of an upper surface of the cylindrical main body 40 and having an upper end closed, a circular protrusion 41 protruding from an inner edge of a lower surface of the cylindrical main body 40 and having a lower end opened, and a box portion 45.

The inner surface of the cylindrical protrusion 38 is a cylindrical surface flush with the inner surface of the cylindrical main body 40. The inner surfaces of the plurality of teeth 33T and 34T are exposed to be flush with the inner surface of the cylindrical main body 40. The inner surface of the circular protrusion 41 is slightly larger than the inner surface of the cylindrical main body 40. The rotor case 25 is fitted to the inside of the cylindrical main body 40 and the cylindrical protrusion 38, and the upper end portion of the valve body support member 24 is fitted to the inside of the circular protrusion 41, so that the O-ring 21R of the O-ring groove 21 of the valve body support member 24 is in close contact with the inner surface of the circular protrusion 41 to waterproof the inside of the armature package 30P.

As illustrated in FIG. 1, the box portion 45 has a flat box-shaped structure opened toward the side opposite of the cylindrical main body 40. Specifically, the box portion 45 includes a bottom wall 44 parallel to the central axis of the cylindrical main body 40 and having a quadrangular shape in a front view, and an annular wall 39 protruding from an outer edge of the bottom wall 44 to the opposite side of the cylindrical main body 40. The lateral central portion of the bottom wall 44 and the main body 40 are connected by a center connecting portion 42, and both lateral ends of the bottom wall 44 and the cylindrical main body 40 are connected by a pair of side connecting portions 43.

Each of the side connecting portions 43 has a projecting piece shape projecting in the tangential direction from the outer peripheral surface of the cylindrical main body 40, and approximately half of the side connecting portion in the thickness direction projects laterally from the side surface of the annular wall 39. The distal end of a portion of each of the side connecting portions 43 projecting laterally from the side surface of the annular wall 39 is disposed at a position rearward of the distal end of the annular wall 39 on the outer side surface of the annular wall 39. On the side surface of each of the side connecting portions 43, a fitting groove 46 is formed from the distal end to the proximal end side of the side connecting portion 43. The fitting groove 46 has a dovetail groove structure, and the width of the bottom surface of the groove is wider than the opening width.

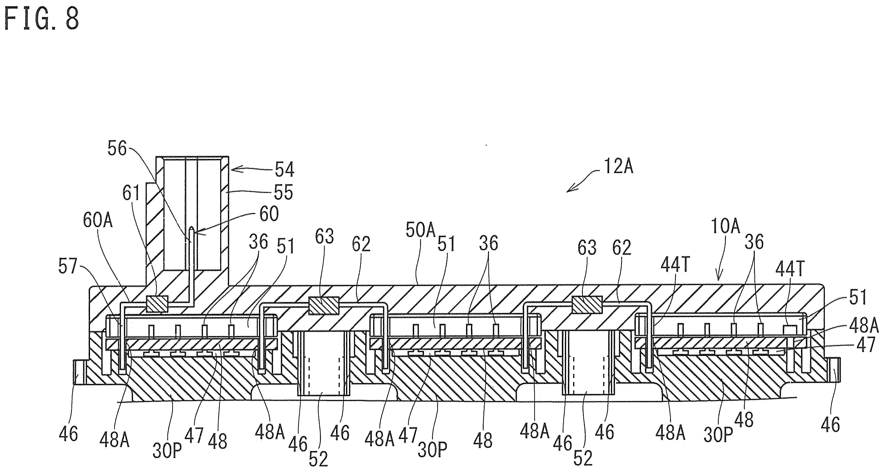

As illustrated in FIG. 3, the inside of the box portion 45 forms a waterproof chamber 47, and a circuit board 48 is accommodated therein. The plurality of lead terminals 36 pass through the center connecting portion 42 and protrude from the bottom wall 44. The plurality of lead terminals 36 pass through connection holes 48B of the circuit board 48 and are soldered to an electric circuit mounted on the circuit board 48. That is, the armature 30 is connected to the circuit board 48. The circuit board 48 is provided with, for example, through holes (not illustrated) through which a plurality of support columns 44T (see FIG. 8) protruding from the bottom wall 44 pass, and the circuit board 48 is fixed to the armature package 30P by thermal caulking of the distal end portions of the plurality of support columns 44T.

In order to hold the yokes 33 and 34 in the secondary molding die, a plurality of recesses 37U are formed in the upper surface of the housing 37H as illustrated in FIG. 1. A part of the upper surface of the yoke 33 (see FIG. 3) on the upper side is exposed inside the recesses. However, since only a part of the flat plate portion of the yoke 33 is exposed, water does not enter the inside from the recesses.

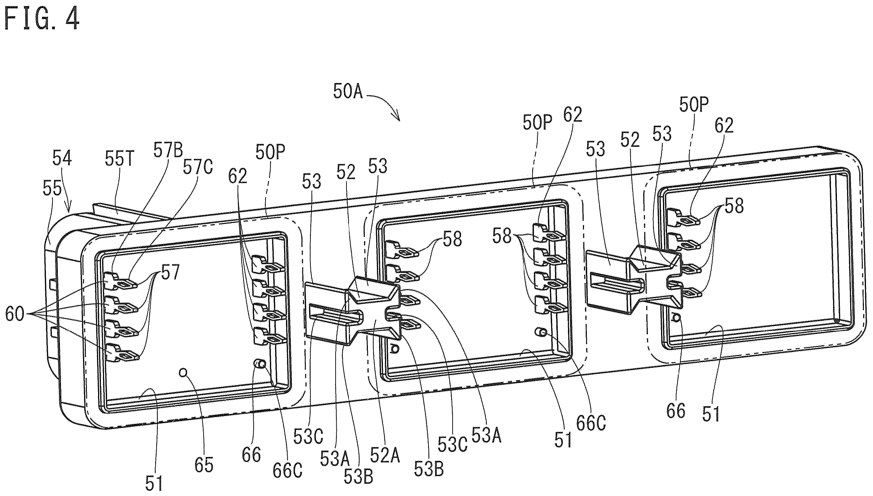

FIG. 4 illustrates a shared base 50A to which a plurality of armature packages 30P are fixed. The shared base 50A has, for example, a band shape extending in the lateral direction, and includes a plurality of waterproof chambers 51 arranged at equal intervals in the lateral direction (longitudinal direction) of the back surface thereof. The front shape of each waterproof chamber 51 is a quadrangle slightly smaller than the front shape of the waterproof chamber 47, and the opening edge surrounding each waterproof chamber 51 on the back surface of the shared base 50A forms a package fixing portion 50P. The distal end surface of the annular wall 39 of each armature package 30P is fixed in an overlapped state to the package fixing portion 50P (see FIG. 1).

The fixation between the armature package 30P and the shared base 50A may be welding such as heat welding or vibration welding, or may be bonding using an adhesive material. Alternatively, a sealing member may be attached to a contact surface between the armature package 30P and the shared base 50A to fix them by screwing.

As illustrated in FIG. 4, positioning protrusions 52 protrude from between adjacent waterproof chambers 51 on the back surface of the shared base 50A. Both side portions of each positioning protrusion 52 are slide engagement portions 53 having a cross-sectional shape corresponding to the fitting groove 46 of the armature package 30P described above. Specifically, the positioning protrusion 52 has a structure in which a projection that is flat in the vertical direction is provided with a pair of triangular ridges 53A that gradually protrude upward from near both ends in the width direction of the upper surface thereof toward the both ends and a pair of triangular ridges 53B that gradually protrude downward from near both ends in the width direction of the lower surface thereof toward the both ends, and grooves 53C are formed between the upper and lower triangular ridges 53A and 53B. In the armature package 30P disposed at both end portions in the longitudinal direction of the shared base 50A, the fitting groove 46 on one side of the armature package 30P engages with the slide engagement portion 53. In the armature package 30P disposed at an intermediate portion in the longitudinal direction of the shared base 50A, the fitting grooves 46 on both sides of the armature package 30P engage with the slide engagement portions 53. Due to the engagement between the slide engagement portions 53 and the fitting grooves 46, each armature package 30P is positioned such that the entire distal end surface of the annular wall 39 exactly overlaps the entire package fixing portion 50P.

The fitting groove 46 of the above embodiment has a dovetail groove structure, but may have, for example, a keyway structure, a T-groove structure, or the like. In addition, the fitting groove 46 and the positioning protrusion 52 do not need to be provided. In this case, for example, a structure in which a plurality of armature packages 30P that have been connected to each other are fixed to the shared base 50A may be adopted. Specifically, in the plurality of armature packages 30P illustrated in FIG. 8, a slide engagement portion having the same shape as the slide engagement portion 53 is integrally provided in the side connecting portion 43 on the left side, and the slide engagement portion of the side connecting portion 43 of the armature package 30P on the right side is engaged and connected to the fitting groove 46 of the side connecting portion 43 of the armature package 30P on the left side.

A connector part 54 is provided at one end portion of the front surface of the shared base 50A in the longitudinal direction. As illustrated in FIGS. 1 and 3, the connector part 54 includes a hood part 55 protruding from the front surface of the shared base 50A and a plurality of connection pins 56 protruding from the innermost surface of the hood part 55. Specifically, the cross-sectional shape of the hood part 55 is, for example, an oval shape elongated in the vertical direction, and is disposed at substantially the center in the lateral direction in the waterproof chamber 51 at one end in the longitudinal direction of the shared base 50A. For example, the plurality of connection pins 56 extend straight from substantially the center in the lateral direction on the innermost surface of the hood part 55 and are aligned in the vertical direction. On the outer surface of the hood part 55, a plurality of ridges 55T extending in the protruding direction of the hood part 55 are provided, and a locking protrusion 55A is provided.

A mating connector part (not illustrated) to be coupled to the connector part 54 includes, for example, a connector housing having a mating hood part to be fitted to an outer side of the hood part 55 and a core portion to be fitted to the inside of the hood part 55, and a plurality of female terminal fittings to be accommodated inside the core portion. The plurality of connection pins 56 are inserted into the core portion from the through holes at the distal end of the core portion and are electrically connected to the plurality of female terminal fittings. An annular seal member is fitted to the outer side surface of the core portion, and the annular seal member is brought into close contact with the inner surface of the hood part 55, whereby the hood part 55 is held in a watertight state. Further, a slit extending from the distal end to an intermediate position is formed in the mating hood part, and a lock arm is provided at a position facing the slit. When the lock arm is engaged with the locking protrusion 55A, the connector part 54 and the mating connector part are locked in a coupled state.

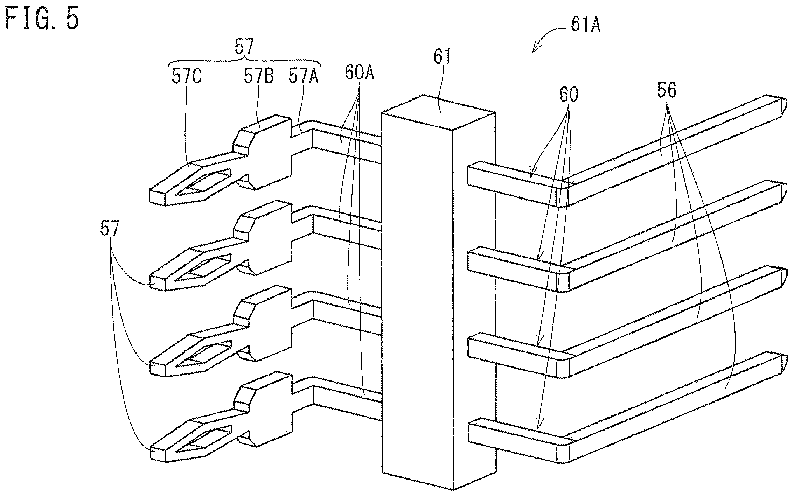

As illustrated in FIG. 5, the plurality of connection pins 56 are configured with, for example, one end sides of a plurality of connector terminals 60 that are bent in a crank shape. The other end sides of the plurality of connector terminals 60 form a plurality of connectors 57 protruding into the waterproof chamber 51, which is located on the back side of the hood part 55.

Specifically, the connector terminals 60 each include a central straight portion 60A, the connection pin 56 that is perpendicularly bent from one end of the central straight portion 60A and extends linearly, and the connector 57 that is perpendicularly bent from the other end of the central straight portion 60A and extends to the opposite side of the connection pin 56. The central straight portion 60A has, for example, a rod shape having the same cross-sectional shape as the connection pin 56. The connector 57 includes a neck portion 57A, a support plate portion 57B, and a connection portion 57C arranged in this order from the central straight portion 60A side. The neck portion 57A has the same cross-sectional shape as the connection pin 56, the support plate portion 57B has a plate shape in which the width is expanded stepwise from the neck portion 57A, and the connection portion 57C has a rhombic frame structure (in other words, a pantograph structure) and extends to the side opposite to the neck portion 57A.

In a state where the plurality of connector terminals 60 are arranged parallel to each other at equal intervals in the vertical direction, the entire central straight portion 60A of each connector terminal 60 and the proximal end portions of the connection pin 56 and the connector 57 are embedded in the shared base 50A. As described above, the plurality of connection pins 56 are arranged vertically in a state of protruding from substantially the center in the lateral direction of the innermost surface of the hood part 55.

On the other hand, as illustrated in FIG. 4, the plurality of connectors 57 are arranged vertically on the innermost surface of the waterproof chamber 51, which is located on the back side of the hood part 55, at the edge portion on a side away from the adjacent waterproof chamber 51. A part of the support plate portion 57B and the connection portion 57C protrude from the innermost surface of the waterproof chamber 51. The plurality of connectors 57 are inserted into a plurality of connection holes 48A (see FIG. 8) arranged along a side of one end in the lateral direction of the circuit board 48.

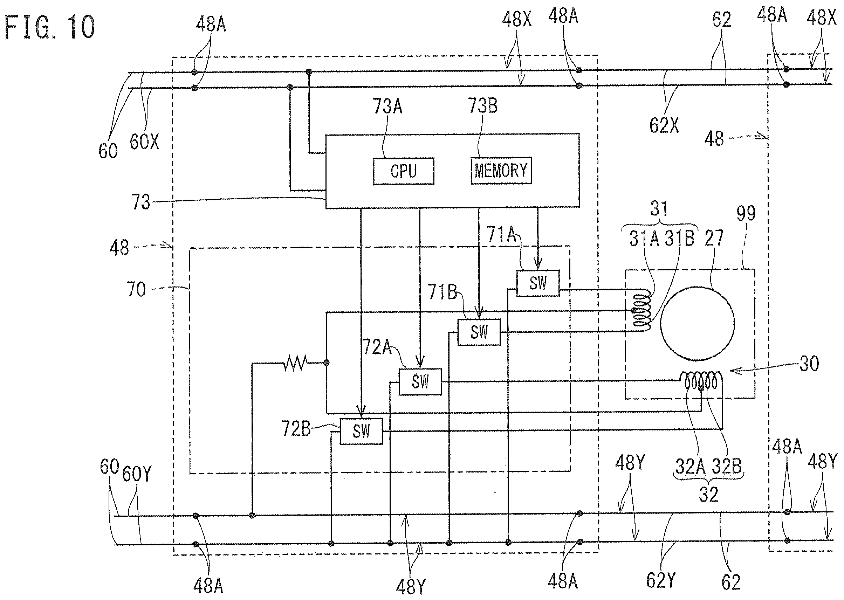

Specifically, as illustrated in FIG. 10, the circuit of each circuit board 48 includes a pair of signal lines 48X, a pair of power lines 48Y, two pairs of signal connection holes 48A that are terminals of the pair of signal lines 48X, and two pairs of power connection holes 48A that are terminals of the pair of power lines 48Y. Specifically, the inner surface of each connection hole 48A is covered with a conductor, and these conductors are electrically connected to the signal lines 48X or the power lines 48Y.

Further, in the circuit board 48, a pair of signal connection holes 48A and a pair of power connection holes 48A are aligned in a certain order respectively on the edges of two sides facing each other. Correspondingly, as illustrated in FIG. 10, the plurality of connector terminals 60 include a pair of signal connector terminals 60X connected to the pair of signal connection holes 48A and a pair of power connector terminals 60Y connected to the pair of power connection holes 48A.

Adjacent circuit boards 48 are connected by four relay terminals 62. The four relay terminals 62 include a pair of signal relay terminals 62X connected to the pair of signal connection holes 48A and a pair of power relay terminals 62Y connected to the pair of power connection holes 48A.

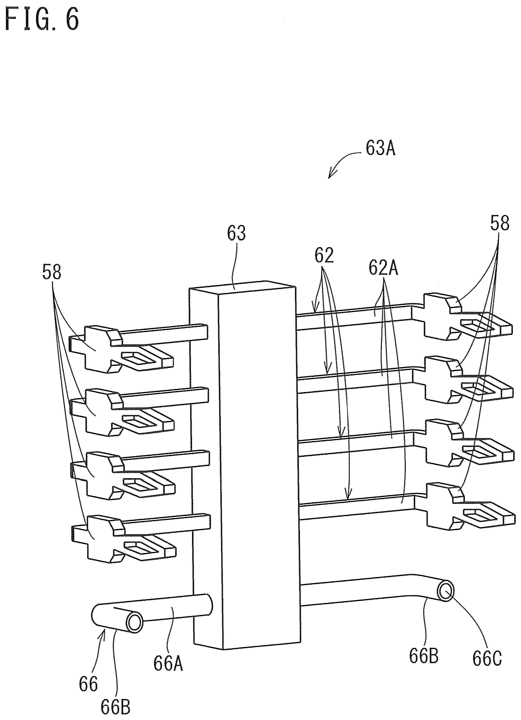

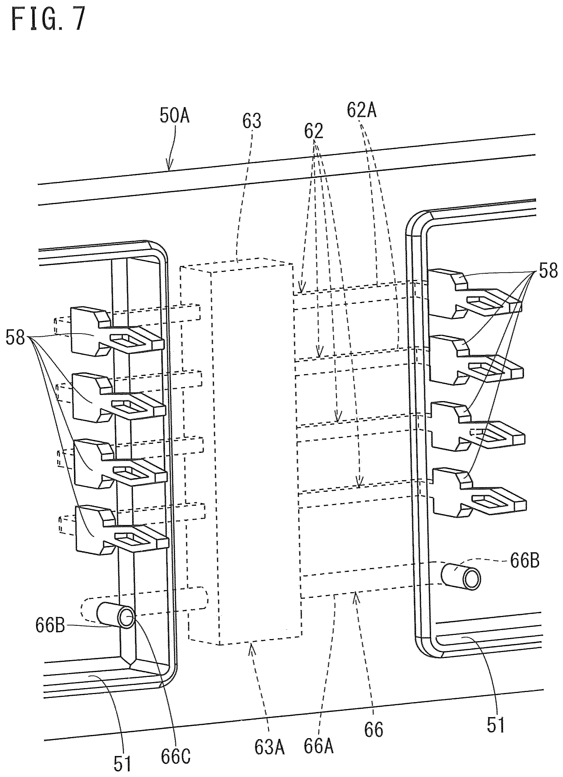

Specifically, as illustrated in FIG. 6, each relay terminal 62 has a structure in which a pair of connectors 58 are perpendicularly bent in the same direction from both end portions of the central straight portion 62A extending linearly in the lateral direction. The connectors 58 have the same shape as the connectors 57 of the connector terminal 60. As illustrated in FIG. 7, in a state where the four relay terminals 62 are arranged parallel to each other at equal intervals in the vertical direction, the entire central straight portion 62A and the proximal end portions of the connectors 58 are embedded in the shared base 50A. The plurality of connectors 58 at one end and the plurality of connectors 58 at the other end are arranged vertically on the edge portions of the adjacent waterproof chambers 51 on the side facing each other, and protrude from the innermost surfaces of the waterproof chambers 51.

The connectors 58 at both end portions of each of the four relay terminals 62 arranged between the adjacent waterproof chambers 51 are respectively inserted into the plurality of connection holes 48A at the respective edges of the adjacent circuit boards 48 on the side facing each other (see FIG. 8). As a result, as illustrated in FIG. 10, the pair of signal lines 48X of all the circuit boards 48 are connected to the pair of signal connector terminals 60X, and the pair of power lines 48Y of all the circuit boards 48 are connected to the pair of power connector terminals 60Y.

In FIG. 4, the arrangement of the group of connectors 57 or the group of connectors 58 at the left edge of each waterproof chamber 51 is the same, and the arrangement of the group of connectors 58 at the right edge of each waterproof chamber 51 is the same. In addition, the arrangement of the connection holes 48A is the same among the plurality of circuit boards 48. Accordingly, any armature package 30P can be fixed to any package fixing portion 50P.

As illustrated in FIG. 4, a communication hole 66C is formed in the shared base 50A to provide communication among all the waterproof chambers 51 so as to have the same pressure. Specifically, the communication hole 66C is formed of a pipe 66 embedded in the shared base 50A together with the relay terminal 62. As illustrated in FIG. 6, the pipe 66 is formed by perpendicularly bending both end portions of a laterally extending pipe in the same direction. As illustrated in FIG. 7, for example, the pipe 66 is disposed below the plurality of relay terminals 62 so as to be parallel to the relay terminals 62 and is embedded in the shared base 50A. An intermediate portion 66A of the pipe 66 and a part of end portions 66B at both ends are embedded in the shared base 50A, and the pair of end portions 66B protrude from the innermost surface of the waterproof chamber 51. As a result, the inner portion of the pipe 66 serves as the communication hole 66C to provide communication between the adjacent waterproof chambers 51, and communication is performed such that all the waterproof chambers 51 have the same pressure.

Specifically, the plurality of relay terminals 62 and the pipe 66 are set in the primary molding die in a state of being arranged in parallel, and a terminal group unit 63A having a structure in which the relay terminals and the pipe are held by a fixing member 63 made of resin illustrated in FIG. 6 is insert-molded. The fixing member 63 has a prismatic shape extending in the vertical direction and is molded in a state to be perpendicular to the central straight portions 62A of the plurality of relay terminals 62 and a pipe 66A of the pipe 66. As illustrated in FIG. 5, the plurality of connector terminals 60 are similarly set in the primary molding die, and a terminal group unit 61A having a structure in which the connector terminals are held by a fixing member 61 made of resin is insert-molded. Then, the terminal group unit 61A and the plurality of terminal group units 63A are set in the secondary molding die, and the shared base 50A is molded. At this time, a vent hole 65 (see FIG. 3) penetrating between the innermost surface of the hood part 55 and the innermost surface of the waterproof chamber 51 is formed in the shared base 50A.

The plurality of connector terminals 60 of the terminal group unit 61A are not limited to a shape bent in a crank shape, and may extend linearly, and the fixing member 61 may be provided at an intermediate position in the longitudinal direction, for example. Further, the connectors 57 and 58 of the terminal group unit 61A and the plurality of terminal group units 63A include the support plate portion 57B whose width is widened stepwise from the neck portion 57A, but do not need to include the support plate portion 57B.

In FIG. 10, an electrical circuit on the circuit board 48 including the pair of signal lines 48X and the pair of power lines 48Y described above is illustrated in a simplified manner. The electric circuit on the circuit board 48 includes a drive circuit 70 for exciting the coils 31 and 32 of the armature 30 to drive the stepper motor 99, and a control circuit 73 for controlling the drive circuit 70.

The drive circuit 70 is connected to the coils 31 and 32 in a unipolar manner, for example, and includes four switches 71A, 71B, 72B, and 72B. One coil 31 is divided into coils 31A and 31B, and the other coil 32 is divided into coils 32A and 32B. In addition, the switches 71A, 71B, 72B, and 72B and the coils 31A, 31B, 32A, and 32B have a one-to-one correspondence. The common connection portion of the coils 31A and 31B and the common connection portion of the coils 32A and 32B are connected to one power line 48Y, and the side opposite to the common connection portion among the coils 31A, 31B, 32A, and 32B is connected to the other power line 48Y via the switches 71A, 71B, 72B, and 72B.

The control circuit 73 includes a CPU 73A and a memory 73B. The pair of signal lines 48X are branched and connected to the control circuit 73, and the CPU 73A receives a command transmitted using the pair of signal lines 48X as a bus line. In addition, an identification number of each circuit board 48 is stored in the memory 73B. Each circuit board 48 excites the coils 31 and 32 of the armature 30 by on-off control of the switches 71A, 71B, 72B, and 72B according to a command assigned with its own identification number, and drives the stepper motor 99.

The configuration of the present embodiment has been described above. Next, functions and effects of the present embodiment will be described. As illustrated in FIG. 1, the armature device 10A and the valve device 12A of the present embodiment include the plurality of armature packages 30P fixed to the common shared base 50A. As a result, the plurality of armature packages 30P, the plurality of circuit boards 48, and the like are integrated into one component, the number of components is reduced for the user of the armature device 10A and the valve device 12A, and the management cost of the components is suppressed. In addition, as illustrated in FIG. 8, since the plurality of circuit boards 48 are accommodated in the waterproof chambers 47, 51 provided for each armature package 30P to achieve waterproofing, the number of components for waterproofing is also reduced. Furthermore, since only one connector part 54 connected to the plurality of armatures 30 is provided in the shared base 50A, the connector connection work is facilitated as compared with the case where the connector part 54 is provided in each of the plurality of armatures 30.

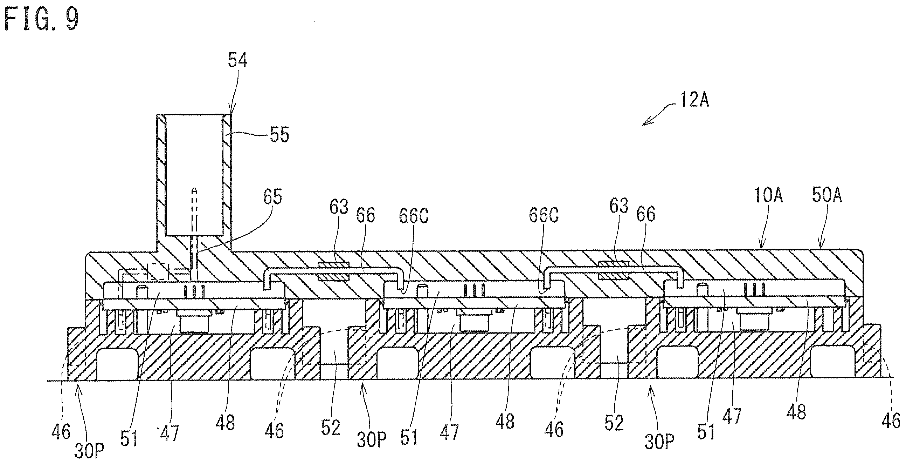

In addition, as illustrated in FIG. 9, since the communication hole 66C provides communication between the adjacent waterproof chambers 47 and 51, performing an airtightness test on one of the waterproof chambers 47 and 51 means performing an airtightness test on all the plurality of waterproof chambers 47 and 51, allowing the airtightness test to be carried out efficiently. In addition, since the vent hole 65 for testing the confidentiality is opened in the hood part 55, the airtightness test can be efficiently performed also in this respect.

Specifically, for example, a suction device (not illustrated) that can be fitted to the hood part 55 and maintain the inside of the hood part 55 in an airtight state is used, and the inside of the hood part 55 is brought into a negative pressure state or a pressurized state to examine a change in pressure. Then, in a case where the pressure does not change even after a predetermined time elapses, it can be determined that there is no problem in airtightness of all the waterproof chambers 47 and 51, and otherwise, it can be determined that there is a problem in airtightness of any of the waterproof chambers 47 and 51. In addition, since the hood part 55 is closed in an airtight state by fitting with the mating connector, it is not necessary to close the vent hole 65 in the hood part 55 after the end of the test.

Furthermore, as illustrated in FIG. 7, since the communication hole 66C is formed by setting the pipe 66 in a mold and molding the shared base 50A, it is possible to prevent the mold for molding the shared base 50A from becoming complicated to form the communication hole 66C. In addition, the pipe 66 can be set in a mold for molding the shared base 50A in a state where the pipe 66 has been fixed by the fixing member 63 together with the plurality of relay terminals 62, and the pipe 66 can be easily set in the mold.

In addition, as illustrated in FIG. 8, when the shared base 50A and the armature packages 30P are brought close to each other in the opening direction of the waterproof chambers 47 and 51, the positioning protrusions 52 and the fitting grooves 46 are fitted to each other, and thereby the plurality of armature packages 30P are two-dimensionally positioned with respect to the shared base 50A. Consequently, the work of fixing the armature packages 30P to the shared base 50A can be easily performed. Moreover, the positioning protrusion 52 has a projecting piece shape protruding from between the adjacent package fixing portions 50P on the shared base 50A, and the fitting groove 46 is disposed on the side surface of the armature package 30P, so that the armature device 10A is reinforced by the engagement between the positioning protrusions 52 and the armature device 10A. Furthermore, since the fitting groove 46 and the positioning protrusion 52 respectively have the dovetail groove structure and the cross-sectional shape corresponding thereto, the connection strength between the armature package 30P and the shared base 50A increases, and thus the strength of the armature device 10A increases.

In addition, the plurality of connector terminals 60 in the hood part 55 include the pair of signal connector terminals 60X and the pair of power connector terminals 60Y, and since these are bus-connected to the plurality of circuit boards 48, wiring is simplified, and the armature device 10A can be downsized. In addition, in the armature device 10A of the present embodiment, since the pair of signal connection holes 48A, which are terminals of the pair of signal lines 48X, and the pair of power connection holes 48A, which are terminals of the pair of power lines 48Y, are aligned in a certain order respectively on the edges of two sides of each of the plurality of circuit boards 48, it is possible to easily connect any number of circuit boards 48 via the plurality of relay terminals 62 by repeating a certain connection pattern.

### [Second embodiment]

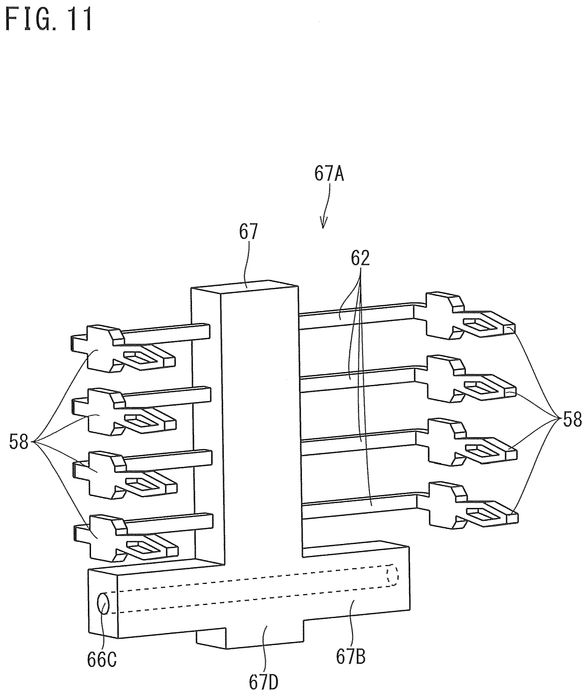

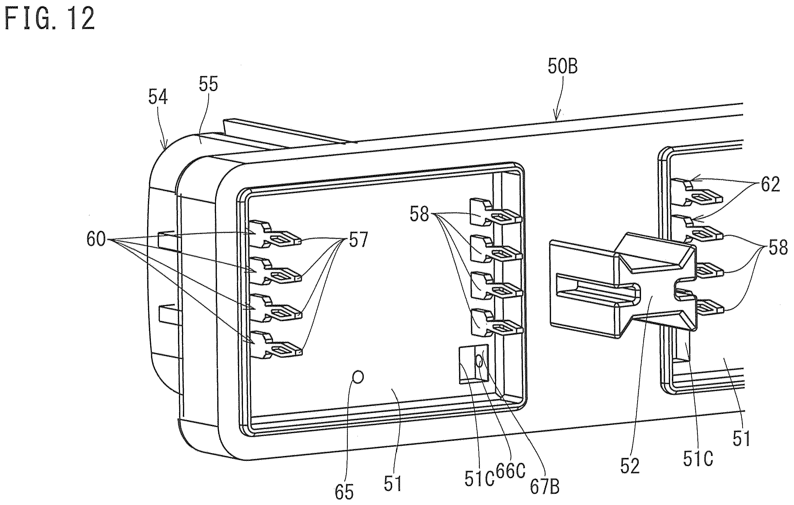

The present embodiment is illustrated in FIGS. 11 and 12, and a terminal group unit 67A and a shared base 50B are different from those of the first embodiment. Specifically, as illustrated in FIG. 11, a fixing member 67 of the terminal group unit 67A includes a vertical portion 67D that extends in the vertical direction and holds a plurality of relay terminals 62, and a lateral side portion 67B that is perpendicular to the lower end portion of the vertical side portion 67D. The communication hole 66C penetrates the central portion of the lateral side portion 67B. As illustrated in FIG. 12, in the shared base 50B, a recess 51C is formed on the inner surface of the waterproof chamber 51. Then, an end surface of the lateral side portion 67B embedded in the shared base 50B is exposed in each recess 51C, and both end portions of the communication hole 66C are opened to the waterproof chamber 51.

### [Third embodiment]

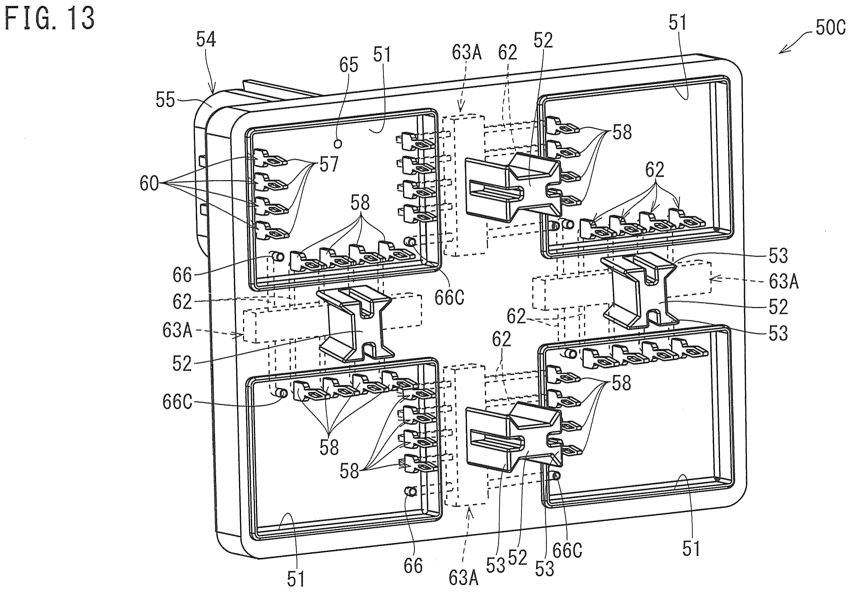

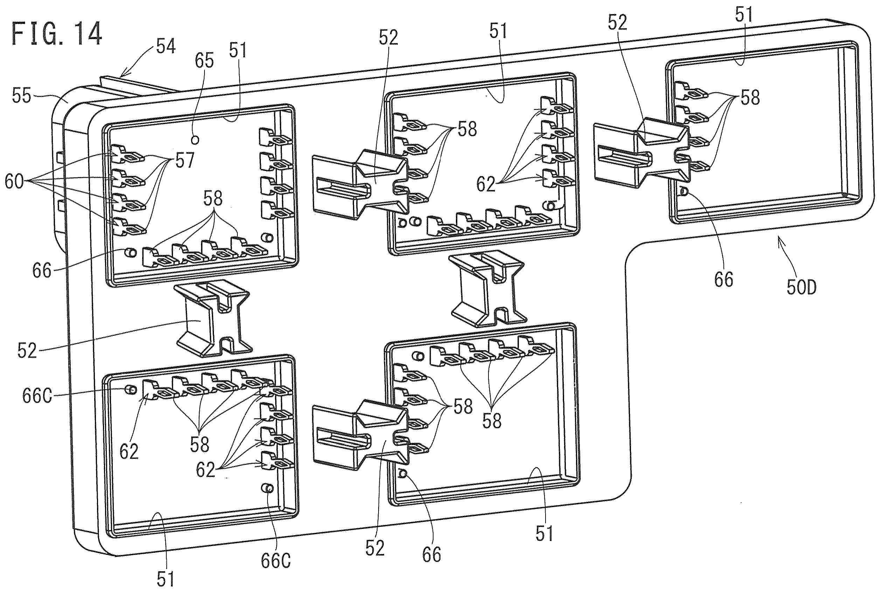

The present embodiment is illustrated in FIGS. 13 and 14, and in addition to the shared base 50A of the first embodiment, a plurality of shared bases 50C and 50D are provided. Any one of them is selected and the armature packages 30P are fixed thereto, whereby an armature device 10A having a different arrangement and a different number of armature packages 30P can be manufactured.

Specifically, as illustrated in FIG. 13, the shared base 50C is configured with waterproof chambers 51 arranged vertically and laterally in two rows and two columns. As illustrated in FIG. 14, the shared base 50D has an additional waterproof chamber 51 as compared with the shared base 50C, forming a structure with a total of five waterproof chambers 51. In addition, a connector part 54 is provided on the front surface side of each of the shared bases 50C and 50D, and connectors 57 of a group of connector terminals 60 are provided in the waterproof chamber 51 on the back side of the connector part 54. The following structure is provided to connect the pair of signal connector terminals 60X (see FIG. 10) and the pair of power connector terminals 60Y (see FIG. 10) constituting the plurality of connector terminals 60 to each pair of signal lines 48X and each pair of power lines 48Y of the plurality of circuit boards 48 corresponding to the plurality of waterproof chambers 51.

That is, in the circuit board 48 of the first embodiment, two groups of connection holes 48A, each group consisting of four holes (see FIGS. 8 and 10), are provided along the edges of two sides facing each other in the lateral direction in the circuit board 48, but in the present embodiment, four groups of connection holes 48A are provided along the edges of four sides of the circuit board 48 although not illustrated. In the group in which the plurality of connection holes 48A are vertically arranged, for example, two connection holes 48A on the upper side form a pair of signal connection holes 48A, and two connection holes 48A on the lower side form a pair of power connection holes 48A. On the other hand, in the group in which the plurality of connection holes 48A are laterally arranged, for example, two connection holes 48A on the left side form a pair of signal connection holes 48A, and two connection holes 48A on the right side form a pair of power connection holes 48A.

Corresponding to the circuit board 48, in each of the waterproof chambers 51 of the shared bases 50C and 50D, a group of relay terminals 62 is embedded such that the connectors 58 of the relay terminals 62 are arranged on any of the edges of the four sides. Then, the connectors 57 of the plurality of connector terminals 60 and the connectors 58 of a plurality of groups of the relay terminals 62 are connected to the connection holes 48A of the circuit board 48, whereby the pair of signal connector terminals 60X (see FIG. 10) and the pair of power connector terminals 60Y (see FIG. 10) constituting the plurality of connector terminals 60 are connected to the pair of signal lines 48X and the pair of power lines 48Y of all the circuit boards 48.

In addition, the shared bases 50C and 50D are provided with positioning protrusions 52 between the waterproof chambers 51 adjacent to each other in the vertical direction in addition to between the waterproof chambers 51 adjacent to each other in the lateral direction. Correspondingly, although not illustrated, the armature package 30P is provided with the above-described fitting grooves 46 on the four side surfaces.

According to the configuration of the present embodiment, since the plurality of types of shared bases 50A, 50C, and 50D are provided, components can be shared among a plurality of types of armature devices having different numbers of armature packages 30P. In addition, since the pair of signal connection holes 48A, which are terminals of the pair of signal lines 48X, and the pair of power connection holes 48A, which are terminals of the pair of power lines 48Y, are aligned in a certain order respectively on the edges of four sides of each of the plurality of circuit boards 48, it is possible to easily connect any number of circuit boards 48 via the plurality of relay terminals 62 by repeating a certain connection pattern.

### [Fourth embodiment]

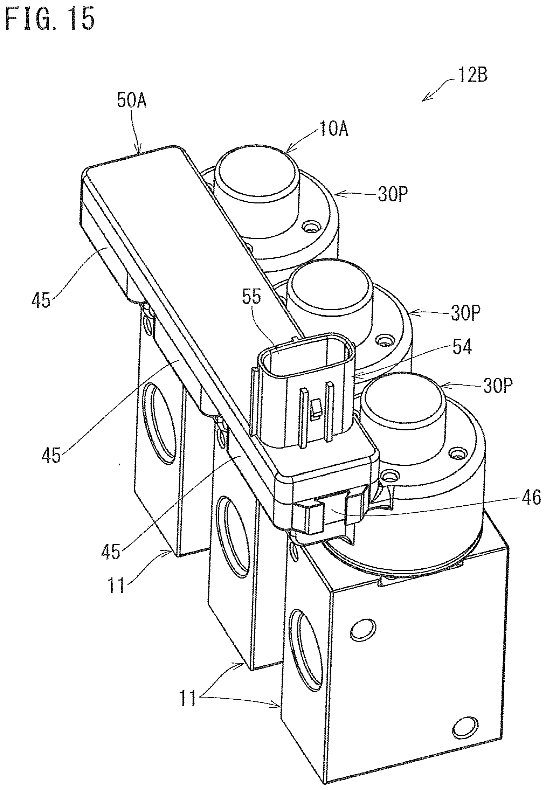

FIG. 15 illustrates a valve device 12B of the present embodiment. In the valve device 12B, the box portion 45 in the armature package 30P is opened upward. Then, the box portion 45 is fixed from below to the shared base 50A described in the first embodiment.

In the valve device 12B of the above embodiment, the box portion 45 is disposed at a position shifted laterally from the cylindrical protrusion 38 and the cylindrical main body 40 (see FIG. 3) of the armature package 30P. Alternatively, for example, the box portion 45 may be disposed at a position directly above the cylindrical protrusion 38 and the cylindrical main body 40.

### [Fifth embodiment]

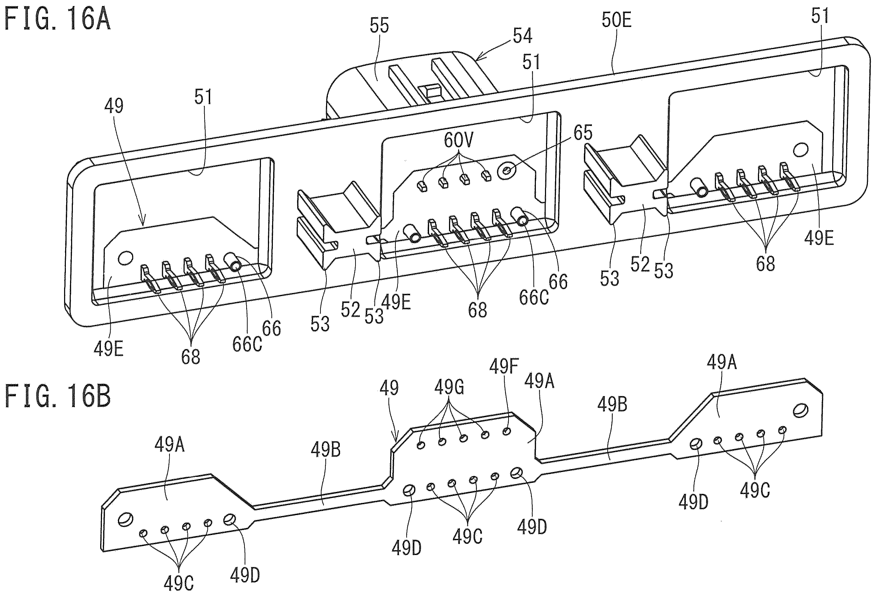

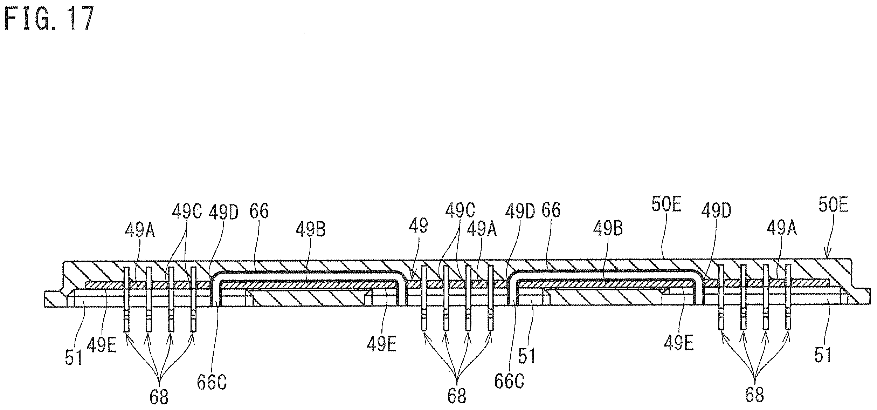

A shared base 50E of the present embodiment illustrated in FIGS. 16A, 16B, and 17 will be described. As illustrated in FIG. 16A, the shared base 50E of the present embodiment has a laterally long band shape similarly to the shared base 50A of the first embodiment, and includes a plurality of (for example, three) waterproof chambers 51 in the longitudinal direction and positioning protrusions 52 between the adjacent waterproof chambers 51. In addition, the connector part 54 is disposed on the back side of the waterproof chamber 51 at the center.

In the shared base 50E, an embedded circuit board 49 is embedded across the plurality of waterproof chambers 51. As illustrated in FIG. 16B, the embedded circuit board 49 includes terminal connection portions 49A corresponding to the respective waterproof chambers 51 and belt-shaped relay portions 49B connecting the adjacent terminal connection portions 49A. As illustrated in FIG. 16A, the embedded circuit board 49 is embedded in the shared base 50E in a state where each terminal connection portion 49A is disposed at a lower position of the corresponding waterproof chamber 51, and one surface of each terminal connection portion 49A is disposed to be flush with the innermost surface of the waterproof chamber 51 as an exposed portion 49E and is exposed in the waterproof chamber 51.

As illustrated in FIG. 16B, four connection holes 49C are laterally aligned along the lower edge of each terminal connection portion 49A. In addition, in the terminal connection portion 49A of the waterproof chamber 51 on the back side of the connector part 54, four connection holes 49G are laterally aligned along the upper edge. Furthermore, the circuit of the embedded circuit board 49 includes a pair of signal lines and a pair of power lines (not illustrated). Among the four connection holes 49C of each terminal connection portion 49A, for example, the conductors on the inner surfaces of a pair of the connection holes 49C on the left side are electrically connected to the pair of signal lines, and the remaining pair of the connection holes 49C are electrically connected to the pair of power lines. Further, among the four connection holes 49G of the central terminal connection portion 49A, for example, conductors on the inner surfaces of the pair of the connection holes 49G on the left side are electrically connected to the pair of signal lines, and conductors on the inner surfaces of the remaining pair of the connection holes 49G are electrically connected to the pair of power lines.

A proximal end portion of a terminal fitting 68 having the same structure as the connector 58 of the relay terminal 62 described in the first embodiment is inserted into each of the connection holes 49C and soldered or brazed, and the entire terminal fitting 68 protrudes from the innermost surface of the waterproof chamber 51. Further, a proximal end portion of a connector terminal 60V is inserted into each of the connection holes 49G and soldered or brazed, and a connection pin (not illustrated) on the distal end side of the connector terminal 60V protrudes from the innermost surface of the hood part 55.

In the terminal connection portion 49A, a pipe insertion hole 49D is formed near the relay portion 49B. The pipe 66 described in the first embodiment is disposed to face the relay portion 49B, and both end portions of the pipe 66 pass through the pipe insertion hole 49D. The pipe 66 is embedded in the shared base 50E together with the embedded circuit board 49, and both end portions of the pipe 66 protrude from the innermost surface of each waterproof chamber 51.

Although not illustrated, the armature package 30P of the present embodiment includes the same circuit board 48 as the armature package 30P of the third embodiment, and is otherwise the same as the armature package 30P of the first embodiment. When the plurality of armature packages 30P are attached to the shared base 50E, the entire terminal fittings 68 are connected to the plurality of connection holes 48A of the circuit board 48 of each armature package 30P, and the entire armature device (not illustrated) of the present embodiment constitutes an electric circuit similar to that of the armature device 10A of the first embodiment.

In the armature device of the present embodiment, since the relay circuit that connects the connector terminal 60V and the plurality of armatures 30 is mounted on the embedded circuit board 49 embedded in the shared base 50E, the relay circuit becomes compact.

### [Other embodiments]

In the first embodiment, the rotor-equipped valve attached to the armature device 10A is a flow rate control valve, but may be a valve that performs only opening and closing. In addition, the armature device 10A may be attached to a rotor-equipped device including a mechanism different from a valve.

In the first and second embodiments, the pipe 66 or the fixing member 63 both including the communication hole 66C is embedded in the shared bases 50A and 50B to form the communication hole 66C in the shared bases 50A and 50B. Alternatively, a slide pin may be provided in a mold for molding the shared base, and the communication hole may be molded in a resin member constituting the shared base.
In the first embodiment, the vent hole 65 is formed in the shared bases 50A and 50B, but the vent hole 65 may be provided by embedding a pipe or the like in the shared base.

In the first embodiment, the plurality of connector terminals 60 are commonly connected to the circuits of the plurality of circuit boards 48, but a separate dedicated connector terminal 60 may be provided for each circuit board 48 so that the connector terminals are individually connected to the respective circuit boards 48.

In the above embodiments, the connector part 54 is disposed at the edge portion of the front surface of the shared base 50A, but may be disposed at the center. Further, the connector part 54 is disposed on the opposite side of the waterproof chamber 51, but the connector part 54 may be disposed on the lateral side of the waterproof chamber 51.

In the above embodiments, the pair of signal connection holes 48A and the pair of power connection holes 48A are arranged in a line along the edge of the circuit board 48, but may be arranged in a plurality of lines or do not need to be arranged in a line.

In the above embodiments, the waterproof chambers 47 and 51 are formed in both the shared bases 50A to 50E and the plurality of armature packages 30P, but for example, the waterproof chambers may be formed only in one of the shared bases 50A to 50E or the plurality of armature packages 30P.

In the armature device 10A of the above embodiments, three or more armature packages 30P are provided, but the number is not limited thereto, and two armature packages 30P may be provided. Furthermore, the arrangement of the plurality of armature packages 30P is not limited to the laterally aligned shape and the matrix shape illustrated in FIGS. 1, 13, and 14, and may be, for example, an L shape, an annular shape, or the like.

In the terminal group units 63A and 67A of the above embodiments, the pipe 66 or the lateral side portion 67B having the communication hole 66C is disposed on one end side in the longitudinal direction of the fixing members 63 and 67, but the pipe 66 or the lateral side portion 67B having the communication hole 66C may be disposed at any position in the longitudinal direction of the fixing members 63 and 67.

### <Supplementary notes>

Hereinafter, feature groups extracted from the above embodiments will be described while showing effects and the like, as necessary. Note that, in the following, to facilitate understanding, corresponding configurations in the above embodiments will be appropriately indicated in parentheses or the like, but these feature groups are not limited to the specific configurations indicated in the parentheses or the like.

### [Feature 1]

An armature device (10A) including: a plurality of armature packages (30P), each of which including an armature (30) that is fitted to an outer side of a rotor case (25) of a stepper motor (99) and that is covered with a resin member (37); a shared base (50A to 50E) made of resin to which the plurality of armature packages (30P) are commonly fixed; a connector part (54) having one hood part (55) integrally formed with the shared base (50A to 50E) and a plurality of connector terminals (60) that are at least partially accommodated in the hood part (55); and a relay circuit (48X, 48Y, 62) that is covered with either the shared base (50A to 50E) or the resin member (37) of the armature packages (30P), or both, and connects the plurality of connector terminals (60) to each of the armatures (30).

### [Feature 2]

The armature device (10A) according to Feature 1, further including: waterproof chambers (47, 51) provided in either the plurality of armature packages (30P) or the shared base (50A to 50E), or both, and sealed in a waterproof state by fixing the plurality of armature packages (30P) to the shared base (50A to 50E); and a circuit board (48) accommodated in each of the waterproof chambers (47, 51) and mounted with a circuit that is connected to the armature (30), wherein the relay circuit (48X, 48Y, 62) includes a plurality of shared base-side conductive members (62, 68) embedded in the shared base (50A to 50E) and each having ends exposed inside the waterproof chambers (47, 51) and connected to the circuit board (48).

### [Feature 3]

The armature device (10A) according to Feature 2, further including, as the shared base-side conductive member (62), a plurality of relay terminals (62) embedded in the shared base (50A to 50E) and each having both end portions exposed to the adjacent waterproof chambers (47, 51) and respectively connected to the circuit of the circuit board (48).

### [Feature 4]

The armature device (10A) according to Feature 3, wherein the circuit of the circuit board (48) includes a pair of signal lines (48X), a pair of power lines (48Y), a plurality of pairs of signal connection holes (48A) that are terminals of the pair of signal lines (48X), and a plurality of pairs of power connection holes (48A) that are terminals of the pair of power lines (48Y), one pair of the plurality of pairs of signal connection holes (48A) and one pair of the plurality of pairs of power connection holes (48A) are aligned in a certain order respectively on at least two edge positions of the circuit board (48), the plurality of connector terminals (60) include a pair of signal connector terminals (60X) having connectors (57) to be connected to the pair of signal connection holes (48A), and a pair of power connector terminals (60Y) having connectors (57) to be connected to the pair of power connection holes (48A), the plurality of relay terminals (62) between the adjacent waterproof chambers (47, 51) include a pair of signal relay terminals (62X) having connectors (58) to be connected to the pair of signal connection holes (48A), and a pair of power relay terminals (62Y) having connectors (58) to be connected to the pair of power connection holes (48A).

### [Feature 5]

The armature device (10A) according to Feature 4, wherein the circuit board (48) has a quadrangular shape, and the pair of signal connection holes (48A) and the pair of power connection holes (48A) are aligned in a certain order on respective edges of at least two sides.

### [Feature 6]

The armature device (10A) according to Feature 2, further including an embedded circuit board (49) that is embedded in the shared base (50E) and on which the shared base-side conductive member (68) is mounted.

### [Feature 7]

The armature device (10A) according to any one of Features 2 to 6, further including a communication hole (66C) that provides communication between the adjacent waterproof chambers (47, 51).

### [Feature 8]

The armature device (10A) according to any one of Features 3 to 5, further including: a fixing member (63) embedded in the shared base (50A to 50D) and fixing the plurality of relay terminals (62); and a pipe (66) fixed to the fixing member (63) together with the plurality of relay terminals (62), having both end portions opened to the adjacent waterproof chambers (47, 51), and providing communication between the adjacent waterproof chambers (47, 51).

### [Feature 9]

The armature device (10A) according to Feature 6, further including a pipe (66) fixed to the embedded circuit board (49), having both end portions opened to the adjacent waterproof chambers (47, 51), and providing communication between the adjacent waterproof chambers (47, 51).

### [Feature 10]

The armature device (10A) according to any one of Features 7 to 9, including a vent hole (65) formed in the shared base (50A to 50E) to provide communication between an inside of the hood part (55) and an inside of the waterproof chambers (47, 51) on a back side of the hood part (55).

### [Feature 11]

The armature device (10A) according to any one of Features 2 to 10, further including a positioning fitting portion (46, 52) provided in the shared base (50A to 50E) and the plurality of armature packages (30P) to be fitted to each other in an opening direction of the waterproof chambers (47, 51) and to two-dimensionally position the plurality of armature packages (30P) with respect to the shared base (50A to 50E) in a direction other than the opening direction.

### [Feature 12]

The armature device (10A) according to Feature 11, wherein the positioning fitting portion (46, 52) includes a positioning protrusion (52) protruding from between a plurality of package fixing portions (50P) on the shared base (50A to 50E) on which the plurality of armature packages (30P) are overlapped, and a fitting groove (46) formed on a side surface of the armature package (30P) and into which a side portion of the positioning protrusion (52) is fitted.

### [Feature 13]

The armature device (10A) according to Feature 12, wherein the fitting groove (46) has a dovetail groove structure in which a groove bottom is wider than a groove opening, and a side portion of the positioning protrusion (52) has a cross-sectional shape corresponding to the dovetail groove structure.

### [Feature 14]

The armature device (10A) according to any one of Features 2 to 13, wherein the plurality of connector terminals (60) include a pair of signal connector terminals (60X) and a pair of power connector terminals (60Y), and the pair of signal connector terminals (60X) and the pair of power connector terminals (60Y) are commonly connected to a plurality of the circuit boards (48).

### [Feature 15]

The armature device (10A) according to any one of Features 1 to 14, including, as the shared base (50A to 50E), a plurality of types of shared bases (50A to 50E) having different numbers of the armature packages (30P) to be fixed to the shared base.

### [Feature 16]

A valve device (12A, 12B) including:
a plurality of rotor-equipped valves (11) each having a rotor (27) accommodated in a rotor case (25) and a valve body (29) configured to operate along with rotation of the rotor (27); and
the armature device (10A) according to any one of Features 1 to 15, including a plurality of armature packages (30P) fitted with the rotor cases (25) of the plurality of rotor-equipped valves (11).

**In** the armature device according to Feature 1 and the valve device according to Feature 16, a plurality of armature packages are fixed to a common shared base. As a result, the plurality of armature packages are integrated into one component, the number of components is reduced for the user of the armature device and the valve device, and the management cost of the components is suppressed. In addition, since only one connector part connected to the plurality of armatures is provided in the shared base, the connector connection work is facilitated as compared with the case where the connector part is provided in each of the plurality of armatures.

In the armature device according to Feature 2, since the plurality of circuit boards connected to the plurality of armature packages are integrated into one component, the number of components can be reduced also in this respect. In addition, since the plurality of circuit boards are accommodated in the waterproof chambers provided for each armature package to achieve waterproofing, the number of components for waterproofing can be also reduced.

In addition, the relay circuit that connects the plurality of connector terminals and the armature includes a plurality of shared base-side conductive members embedded in the shared base and connected to the circuit board with their ends exposed to the inside of the waterproof chamber. A part of the relay circuit may be constituted by a plurality of shared base-side conductive members as a plurality of relay terminals respectively connected to the circuit of the circuit board with both end portions exposed to the adjacent waterproof chambers, or the relay circuit may be constituted by an embedded circuit board embedded in the shared base and on which the shared base-side conductive member is mounted (Feature 6). According to Feature 6, since the relay circuit is mounted on the embedded circuit board, the relay circuit becomes compact.

In the armature device according to Features 4 and 5, since the pair of signal connection holes, which are terminals of the pair of signal lines, and the pair of power connection holes, which are terminals of the pair of power lines, are aligned in a certain order respectively on the edges of at least two sides of each of the plurality of circuit boards, it is possible to easily connect any number of circuit boards via the plurality of relay terminals by repeating a certain connection pattern.

In the armature device according to Feature 7, since a communication hole provides communication between the adjacent waterproof chambers, performing an airtightness test on one waterproof chamber means performing an airtightness test on all the plurality of waterproof chambers, allowing the airtightness test to be carried out efficiently.

In order to carry out the airtightness test, for example, a vent hole (65) providing communication from the outside to one of the waterproof chambers (47, 51) may be provided, a negative pressure or a positive pressure may be applied from the vent hole (65) to the one of the waterproof chambers (47, 51), and it may be checked whether the pressure changes due to leakage. At this time, the vent hole (65) may be provided so as to open to the outside of the hood part (55) and closed after the end of the test. Alternatively, if the vent hole (65) is provided so as to open on the innermost surface of the hood part (55) as in Feature 10, the inside of the hood part (55) is closed by fitting with a mating connector, and thus the vent hole (65) does not need to be closed after the end of the test.

In the armature device according to Features 8 and 9, since the communication hole is formed by setting the pipe in a mold and molding the shared base, it is possible to prevent the mold for molding the shared base from becoming complicated to form the communication hole. Moreover, according to Feature 8, the pipe can be set in a mold for molding the shared base in a state where the pipe is fixed together with the relay terminal by the fixing member, and according to Feature 9, the pipe can be set in a mold for molding the shared base in a state where the pipe is fixed to the embedded circuit board, so that the pipe can be easily set in the mold.

In the armature device according to Feature 11, when the shared base and the armature packages are brought close to each other in the opening direction of the waterproof chamber, the positioning fitting portions are fitted, so that the plurality of armature packages are two-dimensionally positioned with respect to the shared base. In this state, either one of the shared base or each armature package is pressed against the other and is fixed, whereby the plurality of armature packages can be fixed at a specified position with respect to the shared base.

In the armature device according to Feature 12, since the positioning fitting portion includes the positioning protrusion protruding from between the adjacent package fixing portions on the shared base, and the fitting groove formed on the side surface of the armature package and into which the side portion of the positioning protrusion is fitted, the positioning fitting portion also functions as a reinforcement portion for the armature device.

In the armature device according to Feature 13, since the fitting groove and the side portion of the positioning protrusion, which are included in the positioning fitting portion, have the dovetail groove structure and the cross-sectional shape corresponding thereto, the connection strength between the armature packages and the shared base increases by the positioning fitting portion, and thus the strength of the armature device increases.

In the armature device according to Feature 14, the plurality of connector terminals in the hood part include the pair of signal connector terminals and the pair of power connector terminals, and since these are commonly connected to the plurality of circuit boards, wiring is simplified, and the armature device can be downsized.

In the armature device according to Feature 15, since the plurality of types of shared bases having different numbers of armature packages to be fixed thereto are provided as the shared base, components are commonly used among the plurality of types of armature devices having different numbers of armature packages.

Note that, although specific examples of the technology included in the claims are disclosed in the present specification and the drawings, the technology described in the claims is not limited to these specific examples, and includes those obtained by variously modifying and changing the specific examples, and also includes those obtained by singly extracting a part from the specific examples.

### DESCRIPTION OF THE REFERENCE SIGNS

- 10A: Armature device
- 11: Rotor-equipped valve
- 12A, 12B: Valve device
- 25: Rotor case
- 27: Rotor
- 29: Valve body
- 30: Armature
- 30P: Armature package
- 46: Fitting groove (positioning fitting portion)
- 47, 51: Waterproof chamber
- 48: Circuit board
- 48A: Connection hole (signal connection hole, power connection hole)
- 48X: Signal line (relay circuit)
- 48Y: Power line (relay circuit)
- 49: Embedded circuit board
- 49E: Exposed portion
- 50A to 50E: Shared base
- 50P: Package fixing portion
- 51: Each waterproof chamber
- 52: Positioning protrusion (positioning fitting portion)
- 54: Connector part
- 55: Hood part
- 60: Connector terminal
- 60X: Signal connector terminal
- 60Y: Power connector terminal
- 61, 63: Fixing member
- 61A: Terminal group unit
- 62: Relay terminal (relay circuit)
- 65: Vent hole
- 66: Pipe
- 66C: Communication hole
- 99: Stepper motor

## Claims

1. An armature device comprising:
a plurality of armature packages, each of which including an armature that is fitted to an outer side of a rotor case of a stepper motor and that is covered with a resin member;
a shared base made of resin to which the plurality of armature packages are commonly fixed;
a connector part having one hood part integrally formed with the shared base and a plurality of connector terminals that are at least partially accommodated in the hood part; and
a relay circuit that is covered with either the shared base or the resin member of the armature packages, or both, and connects the plurality of connector terminals to each of the armatures.

2. The armature device according to claim 1, further comprising:
a waterproof chamber provided in either the plurality of armature packages or the shared base, or both, and sealed in a waterproof state by fixing the plurality of armature packages to the shared base; and
a circuit board accommodated in each of the waterproof chambers and mounted with a circuit that is connected to the armature, wherein
the relay circuit includes a plurality of shared base-side conductive members embedded in the shared base and each having ends exposed inside the waterproof chamber and connected to the circuit board.

3. The armature device according to claim 2, further comprising, as the shared base-side conductive member, a plurality of relay terminals embedded in the shared base and each having both end portions exposed to the adjacent waterproof chambers and respectively connected to the circuit of the circuit board.

4. The armature device according to claim 3, wherein
the circuit of the circuit board includes a pair of signal lines, a pair of power lines, a plurality of pairs of signal connection holes that are terminals of the pair of signal lines, and a plurality of pairs of power connection holes that are terminals of the pair of power lines,
one pair of the plurality of pairs of signal connection holes and one pair of the plurality of pairs of power connection holes are aligned in a certain order respectively on at least two edge positions of the circuit board,
the plurality of connector terminals include a pair of signal connector terminals having connectors to be connected to the pair of signal connection holes, and a pair of power connector terminals having connectors to be connected to the pair of power connection holes,
the plurality of relay terminals between the adjacent waterproof chambers include a pair of signal relay terminals having connectors to be connected to the pair of signal connection holes, and a pair of power relay terminals having connectors to be connected to the pair of power connection holes.

5. The armature device according to claim 4, wherein the circuit board has a quadrangular shape, and the pair of signal connection holes and the pair of power connection holes are aligned in a certain order on respective edges of at least two sides.

6. The armature device according to claim 2, further comprising an embedded circuit board that is embedded in the shared base and on which the shared base-side conductive member is mounted.

7. The armature device according to any one of claims 2 to 6, further comprising a communication hole that provides communication between the adjacent waterproof chambers.

8. The armature device according to any one of claims 3 to 5, further comprising:
a fixing member embedded in the shared base and fixing the plurality of relay terminals; and
a pipe fixed to the fixing member together with the plurality of relay terminals, having both end portions opened to the adjacent waterproof chambers, and providing communication between the adjacent waterproof chambers.

9. The armature device according to claim 6, further comprising a pipe fixed to the embedded circuit board, having both end portions opened to the adjacent waterproof chambers, and providing communication between the adjacent waterproof chambers.

10. The armature device according to any one of claims 7 to 9, comprising a vent hole formed in the shared base to provide communication between an inside of the hood part and an inside of the waterproof chambers on a back side of the hood part.

11. The armature device according to any one of claims 2 to 10, further comprising a positioning fitting portion provided in the shared base and the plurality of armature packages to be fitted to each other in an opening direction of the waterproof chambers and to two-dimensionally position the plurality of armature packages with respect to the shared base in a direction other than the opening direction.

12. The armature device according to claim 11, wherein the positioning fitting portion includes a positioning protrusion protruding from between a plurality of package fixing portions on the shared base on which the plurality of armature packages are overlapped, and a fitting groove formed on a side surface of the armature packages and into which a side portion of the positioning protrusion is fitted.

13. The armature device according to claim 12, wherein
the fitting groove has a dovetail groove structure in which a groove bottom is wider than a groove opening, and
a side portion of the positioning protrusion has a cross-sectional shape corresponding to the dovetail groove structure.

14. The armature device according to any one of claims 2 to 13, wherein
the plurality of connector terminals include a pair of signal connector terminals and a pair of power connector terminals, and
the pair of signal connector terminals and the pair of power connector terminals are commonly connected to a plurality of the circuit boards.

15. The armature device according to any one of claims 1 to 14, comprising, as the shared base, a plurality of types of shared bases having different numbers of the armature packages to be fixed to the shared base.

16. A valve device comprising:
a plurality of rotor-equipped valves each having a rotor accommodated in a rotor case and a valve body configured to operate along with rotation of the rotor; and
the armature device according to any one of claims 1 to 15, including a plurality of armature packages fitted with the rotor cases of the plurality of rotor-equipped valves.
